# EUROPEAN PATENT SPECIFICATION

(11) **EP 0 334 639 B1**
(45) Date of publication and mention of the grant of the patent: **07.01.1993**
(21) Application number: 89302861.3
(22) Date of filing: 22.03.1989
(51) Int. Cl.: B01D 24/00, C02F 3/06, C02F 3/34, C02F 3/10

(54) **Filter Device**
Filtereinrichtung
Dispositif de filtration

(30) Priority: 25.03.1988 GB 8807234
(43) Date of publication of application: 27.09.1989
(73) Proprietor: BIOFIL LIMITED, Liverpool L13 1EJ (GB)
(72) Inventor: Simpson, James Roxby, Stocksfield Northumberland NE43 7RQ (GB); Tucker, Martin Robilliard, Haydon Bridge Northumberland NE47 6NW (GB)
(74) Representative: Harrison, Michael Robert

(56) References cited:
- EP-A- 0 161 912
- FR-A- 2 365 528
- FR-A- 2 593 188
- US-A- 4 029 546
- PATENT ABSTRACTS OF JAPAN, vol. 10, no. 373, 12th December 1986, page 138 C 391; & JP-A-61 167 498 (SUIDO KIKO K.K.) 29-07-1986; & CHEMICAL ABSTRACTS, vol. 105, no. 26, 29th December 1986, page 341, abstract no. 232162u; & JP-A-61 167 498 (SUIDO KIKO KAISHA LTD.) 29-07-1986

## Description

The present invention is a filter device for the treatment of water to render it potable and is of particular value in emergency situations where microbiologically safe water is required with the minimum of delay and where disinfecting agents are not readily or continuously available, or acceptable.

Nearly all water-treatment plants include as an essential feature the filtration of the available water through sand. The two main types of sand filtration process are described respectively as slow and rapid sand filtration, which names reflect the relative rates of flow of the aqueous liquid through the filter medium. However, these two types of sand filtration process are also distinguished by fundamental differences of operating procedure.

In the case of rapid sand filters, the water is treated to coagulate the finely-divided and suspended impurities (including many of the harmful micro-organisms present) in flocculating tanks, after which the large particles formed by coagulation are removed in settlement tanks. Pretreatment of the water in this way makes it possible to carry out the filtration through sand at a faster flow-rate. No such pretreatment is carried out in the case of slow sand filters.

In slow sand filters, removal of impurities, and particularly harmful microorganisms, is effected not only by physical straining through the upper layers of the sand grains, but also by the entrapment of the impurities by microorganisms which develop in the upper layer of the sand: this is commonly known as the "Schmutzdecke" layer, which initially may take several weeks to develop and in the slow sand filter plays a key role in producing a high quality water.

In an emergency situation in which supplies of safe potable water need to be established and wherein sources of chemical treatment agents such as disinfectants are not readily available, it would in principle be desirable to use a slow sand filter for the purpose. However the creation of the necessary Schmutzdecke layer takes such a long time that slow sand filters have until now been wholly unsuitable for use in an emergency.

FR-A-2,593,188 describes a filter for use in a different area to that of treating drinking water, namely, the treatment of industrial and municipal waste water. Sand or other loose material serves as a carrier for suitable microorganisms, and can be introduced into a reactor in order to re-start it after it has been shut down for a period.

Against this background, it is an object of the present invention to provide a filter device which is of value in emergencies and other situations and which may be used to establish supplies of safe water in a matter of hours.

The filter device according to the present invention comprises exo-polysaccharide producing, gram-negative bacteria supported upon a water-permeable material which is non-toxic to microorganisms and to human beings, is resistant to temperatures within the range from -15°C to +65°C, and is not readily biodegradable. This novel filter device, which may be used as a replacement in a slow sand filter for the conventional Schmutzdecke layer, is available for producing potable water in a fraction of the time which would be required for the creation of a usual Schmutzdecke layer.

In one preferred form of the filter device according to the present invention, the device is freeze-dried after the bacteria have been applied to the water-permeable material. The freeze-dried product may then be vacuum packed so as to exclude moisture and stored until required for use. When an emergency arises in which potable water is required urgently, the product may be reactivated within a few hours by the addition of water and then be used, suitably supported, for the purification of available water in the manner of a slow sand filter.

The exo-polysaccharide producing, gram-negative bacteria employed in the filter device of the invention are of a type which is found in Schmutzdecke layers; that is, they occur naturally in the biofilm layer of a standard slow-sand water filter, especially in the region within 5 cm, more especially 2.5 cm, of the surface of the filter medium. Such naturally-occurring bacteria are characteristically producers of copious amounts of polysaccharides in the form of a viscous or gelatinous material, under conditions of low nutrient concentrations. The bacteria used in the present invention may be a mixture of bacteria obtained as such from a Schmutzdecke layer or may be pure cultures of single strains of a bacterium, used singly or in mixtures. Among suitable bacteria may be mentioned strains of pseudomonas vesicularis, for example NCIB40121; zoogloea ramigera, for example ATCC 25935 or NCIB 10340; pseudomonas sp., for example NCIB 11264; achromobacter georgiopolitanum, for example ATCC 23203; and non-pathogenic alginate-producing pseudomonads such as pseudomonas mendocina, for example NCIB 10541.

The particularly preferred bacterium for use in the filter device according to the present invention is that which is part of the dominant microbial flora in the surface biofilm of an established conventional slow sand filter and which is deposited as NCIB 40121. It has the following properties, namely unpigmented rapid growth on Medium A (see below), copious polysaccharide slime production on Medium B (see below) both in liquid medium and on medium solidified with 1.5 per cent agar, no or very poor growth on full strength standard bacteriological Nutrient Agar media, and no growth on McConkey Agar. In the foregoing and hereinafter, Medium A is the product Nutrient Broth of M-Lab Ltd., at a concentration of 2.5g/litre, containing 1.0g/litre of glucose. Medium B is Nutrient Broth at a concentration of 2.5g/litre containing 10.0g/litre of glucose.

The selected bacterium or mixture of bacteria is supported upon a water-permeable material of the characteristics specified above. The material employed should be not readily biodegradable but material which biodegrades relatively slowly, for example over the period of use of the device, which may typically be say from 3 to 6 months, is suitable for this purpose. Preferably the material is resistant to ultraviolet radiation, to enable it to be used in conditions of prolonged strong sunlight. In order to permit the colonisation of microorganisms on its surface, it is desirable that the surface of the material should be not highly polished nor smooth. Of course the selected water-permeable material should be of low solubility, or insoluble, in aqueous liquids.

The water-permeable material may take various forms. Thus, for example, it may be a rigid or compressible porous material such as an expanded polymeric material, or a fibrous mat such as a coir, or a non-woven fabric such as a paper-like product, or a woven product such as of cotton or of a cellulosic material. A suitable expanded material is the cellulosic sponge sold under the trade mark "Spontex" (of Spontex Ltd.). When a flexible material of this type is used, it may be stored and/or conveyed in rolled and/or compressed form. A suitable non-woven material is the product sold under the trade mark "Vilene", which is offered for sale as a tailor's interfacing material. This sheet materials such as "Vilene" may be used in single or multiple layers, or sandwiched with other materials for support.

If the selected water-permeable material is porous it should, of course, be open-pored. The average pore diameter is preferably at least 10 µm (microns) both before and after impregnation with the bacteria. More preferably, the average pore diameter is at least 20 µm (microns), especially of the order of 50 µm (microns), before impregnation. Both the pore diameter and the pore density affect the rate at which the water to be purified can pass through the filter device and this should be borne in mind in selecting the water-permeable material to be used. With this in mind, porosities of 70 to 90 percent and higher are preferred.

If the filter device is to be freeze-dried, then conditions typical for freeze-drying processes may be used for that purpose. Preferably the impregnated material is frozen at a temperature of the order of minus 70 degrees Centigrade or lower. The subsequent removal of water by sublimation under vacuum is preferably carried out under a vacuum of 133.32 Pa (1 torr) or below that pressure. Following freeze-drying, the impregnated material is sealed in any suitable material which is impermeable to water-vapour, for example a sheet synthetic polymeric material. When the freeze-dried product is subsequently required for use, the vacuum seal is broken and water is added, with the result that within several hours (for example 6 to 8 hours) the microorganisms are reactivated and ready for use. To promote reactivation and growth of the freeze-dried microorganisms, microbial nutrients may be incorporated in the impregnated material before the freeze-drying step,or may be added to the water used for reactivation.

In order to use the filter device according to the invention, it may be placed in contact with a bed of sand or another filter support medium and then the water to be purified is passed through the device and the filter support medium in turn. For example, the device may be laid horizontal upon a bed of sand or attached in a vertical position to one or more blocks of a rigid porous support medium. Suitable simple structures for this purpose are shown in the attached drawings, wherein:-
Fig. 1 is a vertical sectional elevation of a first form of filter unit;
Fig. 2 is a plan view corresponding to Fig. 1;
Fig. 3 is a vertical sectional elevation of a second form of filter unit; and
Fig. 4 is a plan view corresponding to Fig. 3.

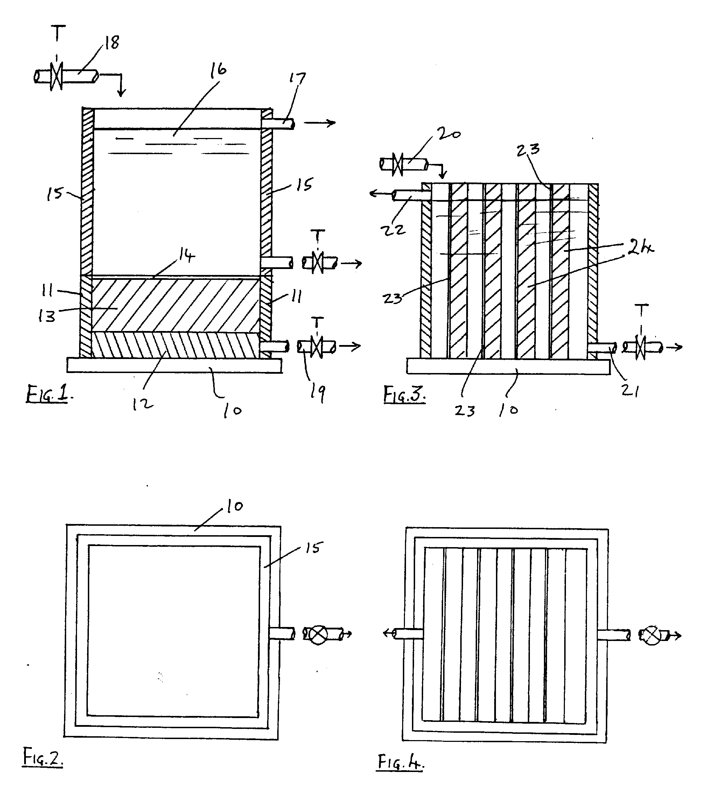

The filter unit illustrated in Figs. 1 and 2 is, as shown, square in plan (for example approximately 1 metre square) and somewhat taller than it is wide (say about 1.5 metres). It is formed of flanged flat tank sections made in glass-reinforced plastic, assembled in situ from a readily transportable pack, upon a support plinth 10. Within the lower part of the unit defined by side sections 11 are underdrains 12 of gravel or similar material and above the underdrains 12 is a support medium 13 of sand.

A filter device 14 according to the invention in the form of a bacterial layer on a flexible water-impermeable material is supported by the medium 13. The edges of the device 14 and held and sealed between the flanges of the side sections 11 and upper side sections 15. The level of water 16 in the unit is controlled by an overflow 17.

In use of the unit, water for treatment is introduced to the upper part of the tank by an inlet pipe 18 and percolates through the filter device 14 and the support medium 13 to the underdrains 12, potable water being withdrawn via a valved outlet pipe 19. When, in use, the filter device 14 eventually becomes blocked, it is readily replaced by a new one.

The unit illustrated in Figs. 3 and 4 relies upon vertical filter panels, through which the water flows in a generally horizontal direction from an inlet 20 to an outlet 21, the water level being controlled by an overflow 22. The filtering system consists of filter devices 23 according to the invention, attached at their edges to blocks 24 of a porous support medium, placed at spaced positions vertically in the water tank.

In the case of a unit of Figs. 3 and 4, when a filter device eventually becomes blocked, and the associated support block 24 may easily be replaced without the need to take the unit overall out of service.

In experimental use of each of the illustrated units, high removals of pathogenic microorganisms have been achieved within hours of the initiation of the reactivation of the supported bacteria.

The invention is further described and illustrated by means of the following Examples, which describe the preparation of two embodiments of the filter device according to the invention and the use of one of the resulting devices to purify contaminated water. In both cases, the bacterium used was the particularly preferred bacterium described above and identified by the Deposit No. NCIB 40121.

### Example 1

The Maintenance Medium is the above-described Medium B solidified with 1.5 per cent (w/v) agar. For long-term storage, bacteria grown on Maintenance Medium at 30°C for 48 hours are suspended in Medium B containing glycerol (20% w/v) and stored at - 70°C in screw-capped bottles. In all cases the glucose, sterilised separately by autoclaving at 121°C for 15 min, is added after the medium has been sterilised in the same way.

### (a) Growth of inoculum.

The slime-producing bacterium is inoculated from a maintenance plate into 50ml Medium A in a 250ml capacity conical flask and incubated in a shaker-incubator at 100rpm, 30°C for 16 hours. This culture is used to inoculate (2% vol/vol) 50ml of the same medium, and the culture is incubated as above for 6 hours.

### (b) Inoculation of water-permeable material and growth of bacteria.

Sterile discs, 5cm. diameter, of a cellulosic sponge material sold as "Spontex", that has been washed at 121°C in distilled water under pressure in an autoclave, are incubated in the above inoculum, under the same conditions, for 3 hours. The inoculated filter discs are transferred aseptically to 50ml of Medium B in a 250ml capacity conical flask, and incubated at 30°C, 100rpm, in an orbital incubator until sufficient slimy biofilm has been established to provide a resistance to water flow such that a linear flow rate of approximately 0.2m/hour is obtained through the filter under a hydrostatic head of 10cm. A typical time of incubation taken to achieve this amount of biofilm will be between 8 and 16 hours depending on the initial pore size of the support material. A larger pore size predicates a longer incubation period.

### Example 2.

The procedure described in Example 1 is used to establish biofilms in 5cm diameter discs of 1 to 2mm thick layers of the non-woven fabric sold under the trade mark "Vilene". A suitable biofilm was formed after 8 hours of incubation.

### Example 3.

By the same procedure as used in Examples 1 and 2, a biofilm was formed in 5cm diameter discs comprising a 10mm thick layer of coir fibrous matting strengthened with plastic net. The final incubation time was 16 hours.

### Example 4. Laboratory measurement of filter performance.

Performance is assessed using 5cm diameter biofilm-impregnated discs as prepared in Examples 1 to 3 in standard laboratory filter holders with plastic mesh support screens, under a hydrostatic head of 10cm. Two types of test water are used (a) faecal coliform-contaminated natural water, typically incoming water to a municipal water treatment works; (b) phosphate-buffered saline containing a laboratory strain of Escherichia coli that carries a nalidix acid-resistance gene, (between 10,000 and 20,000 bacteria/100ml). The coliform bacterial count (used as a measure of water quality) is measured in both waters by the standard international procedures (principally the use of a selective medium - McConkey's medium - in multiple tube and filter assays, and standard confirmatory tests for E. coli). Nalidixic acid-resistant bacteria are counted by plating 0.1ml samples of the contaminated water on to Nutrient Agar (M-Lab Ltd.) plates containing nalidixic acid at 10µg/ml. The effluent water from the filters is assayed for coliform contamination as described above in successive 200ml batches of filtrate. Typically the coliform count is reduced to less than 10 bacteria per 100ml in the second 200ml of filtrate and remains below this level in subsequent 200ml batches (at least 10).

### Example 5. Production on a large laboratory scale.

The water-permeable support material used is a 1-metre-square sheet of the cellulosic sponge sold under the trade mark "Spontex", 15 to 20mm thick. This sheet is washed in distilled water by autoclaving at 121°C for 2 hours and is subsequently squeezed dry. The sheet is fully immersed in Medium A in a laboratory fermenter and sterilised with the medium, in-situ. The glucose is sterilised separately as in Example 1, and added aseptically. The fermenter temperature in equilibrated at 30°C and a 5% (by volume) inoculum of bacterial culture, prepared as for the inoculum in Example 1, is added. The fermenter is aerated at 1 litre air/min/litre of culture medium, and stirred at 200rpm. After 8 hours, sterile glucose (40% w/v) is added to give a final concentration of 10g/litre and incubation is continued under the same conditions for a further period of between 16 and 24h. ; dissolved oxygen levels are not controlled.

The impregnated sheet obtained is suitable for use in a filter unit such as one of the two types illustrated in the accompanying drawings.

## Claims

1. A filter device for use in the purification of water to render it potable, characterised in that it comprises exo-polysaccharide producing, gram-negative bacteria supported upon a water-permeable material which is non-toxic to microorganisms and to human beings, is resistant to temperatures within the range from -15°C to +65°C, and is not readily biodegradable.

2. A filter device according to claim 1, characterised in that the bacteria are of a type occurring naturally in the biofilm layer of a slow-sand water filter.

3. A filter device according to claim 1 or claim 2, characterised in that the bacteria are one or more of the bacteria identified by the Deposit Nos. NCIB 40121, ATCC 25935, NCIB 10340, NCIB 11264, ATCC 23203 and NCIB 10541.

4. A filter device according to any of the preceding claims, characterised in that the water-permeable material is a rigid or compressible porous material.

5. A filter device according to claim 4, characterised in that the water-permeable material is a cellulosic sponge.

6. A filter device according to claim 4 or claim 5, characterised in that the water-permeable material has an average pore diameter of at least 20 µm (microns).

7. A filter device according to any of claim 4 to 6, characterised in that the water-permeable material has a porosity of at least 70 per cent.

8. A filter device according to any of claim 1 to 3, characterised in that the water-permeable material is a fibrous mat.

9. A filter device according to claim 8, characterised in that the fibrous mat comprises coir fibres.

10. A filter device according to any of claim 1 to 3, characterised in that the water-permeable material is a non-woven or woven fabric.

11. A filter device according to any of the preceding claims, characterised in that it has been freeze-dried after the bacteria have been applied to the water-permeable material.

## Patentansprüche

1. Eine Filtereinrichtung nützlich für die Reinigung von Wasser, um es trinkbar zu machen, dadurch gekennzeichnet, daß es gramnegative Bakterien enthält, die Exopolysaccharide herstellen und die einem wasserdurchlässigem Material aufliegen, welches weder giftig für die Mikroorganismen noch für den Menschen ist, welches gegen Temperaturen im Bereich von -15°C bis zu +65°C widerstandsfähig und nicht ohne weiteres biologisch abbaubar ist.

2. Eine Filtereinrichtung nach Anspruch 1, dadurch gekennzeichnet, daß die Bakterien zu einer Art gehören, die natürlicherweise in der biologischen Membranschicht eines langsamen Sandwasserfilters vorkommen.

3. Eine Filtereinrichtung nach Anspruch 1 oder Anspruch 2, dadurch gekennzeichnet, daß die Bakterien zu einem Bakterium oder mehreren der Bakterien gehören, die durch die Hinterlegungsnummern NCIB 40121, ATCC 25935, NCIB 10340, NCIB 11264, ATCC 23203 und NCIB 10541 gekennzeichnet sind.

4. Eine Filtereinrichtung nach einem der vorhergehenden Ansprüche, dadurch gekennzeichnet, daß das wasserdurchlässige Material ein starres oder ein zusammendrückbares poröses Material ist.

5. Eine Filtereinrichtung nach Anspruch 4, dadurch gekennzeichnet, daß das wasserdurchlässige Material ein Schwamm aus Zellulose ist.

6. Eine Filtereinrichtung nach einem der Ansprüche 4 oder 5 dadurch gekennzeichnet, daß das wasserdurchlässige Material eine durchschnittlich Porengröße von mindestens 20 µm besitzt.

7. Eine Filtereinrichtung nach einem der Ansprüche 4 bis 6, dadurch gekennzeichnet, daß das wasserdurchlässige Material eine Porosität von mindestens 70 Prozent besitzt.

8. Eine Filtereinrichtung nach einem der Ansprüche 1 bis 3, dadurch gekennzeichnet, daß das wasserdurchlässige Material eine faserige Matte ist.

9. Eine Filtereinrichtung nach Anspruch 8, dadurch gekennzeichnet, daß die faserige Matte Kokosfasern enthält.

10. Eine Filtereinrichtung nach einem der Ansprüche 1 bis 3, dadurch gekennzeichnet, daß das wasserdurchlässige Material ein ungewebter oder ein gewebter Stoff ist.

11. Eine Filtereinrichtung nach einem der vorhergehenden Ansprüche, dadurch gekennzeichnet, daß sie gefriergetrocknet wurde, nachdem die Bakterien auf das wasserdurchlässige Material aufgetragen worden waren.

## Revendications

1. Un dispositif de filtration pour utilisation dans la purification de l'eau, pour la rendre potable, caractérisé en ce qu' il comprend des bactéries de gram-négatives produisant des exo-polysaccharides ayant pour support un materiau perméable à l'eau, qui n'est pas toxique pour les micro-organismes ni pour les etres humains, est resistant aux temperatures comprises entre - 15°C à + 65°C, et n'est pas facilement bio-dégradable.

2. Un dispositif de filtration selon la revendication 1, caractérisé en ce que les bactéries sont d'un type qui se produit naturellement dans la couche biofilm d'un filtre à eau de sable lent.

3. Un dispositif de filtration selon les revendications 1 ou 2, caractérisé en ce que les bactéries, une ou plusieurs, sont de la bactérie identifiée dans les dépôts Nos NCIB 40121? ATCC 25935, NCIB 10340, NCIB 11264, ATCC 23203 and NCIB 10541.

4. Un dispositif de filtration selon l'une ou l'autre des précédentes revendications, caractérisé en ce que le matériau perméable à l'eau est un matériau poreux rigide ou compressible.

5. Un dispositif de filtration selon la revendication 4, caractérisé en ce que le matériau perméable à l'eau est une èponge cellulosique.

6. Un dispositif de filtration selon les revendications 4 ou 5, caractérisé en ce que le matériau perméable à l'eau est constitué de pores d'un diamètre moyen d'au moins 20 microns.

7. Un dispositif de filtration selon l'une ou l'autre des revendications 4 à 6, caractérisé en ce que le matériau perméable à l'eau a une porosité d'au moins 70 pour cent.

8. Un dispositif de filtration selon l'une ou l'autre des revendications 1 à 3, caractérisé en ce que le matériau perméable à l'eau est une natte fibreuse.

9. Un dispositif de filtration selon la revendication 8, caractérisé en ce que la natte fibreuse comprend des fibres de coco.

10. Un dispositif de filtration selon l'une ou l'autre des revendications 1 à 3, caractérisé en ce que le matériau perméable à l'eau est un tissu non-tissé ou tissé .

11. Un dispositif de filtration selon l'une ou l'autre des revendications précédentes, caractérisé en ce qu' il a été séché par congélation après que les bactéries aient été fixées au matériau perméable à l'eau.
